(19)

Europäisches
Patentamt
European
Patent Office
Office européen
des brevets

(11) **EP 3 722 841 A1**

(12) **EUROPEAN PATENT APPLICATION**

(43) Date of publication:
**14.10.2020 Bulletin 2020/42**

(51) Int Cl.:
*G02B 1/04* (2006.01)  *G02B 5/18* (2006.01)

(21) Application number: **20167262.3**

(22) Date of filing: **31.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.04.2019 JP 2019073577**
**06.03.2020 JP 2020038799**

(71) Applicant: **CANON KABUSHIKI KAISHA OHTA-KU**
**Tokyo 146-8501 (JP)**

(72) Inventor: **UKUDA, Hideo**
**Tokyo, 146-8501 (JP)**

(74) Representative: **WESER & Kollegen**
**Patentanwälte PartmbB**
**Radeckestraße 43**
**81245 München (DE)**

(54) **DIFFRACTIVE OPTICAL ELEMENT, OPTICAL DEVICE, AND IMAGING APPARATUS**

(57)     A diffractive optical element includes a first base material, and two different resin components disposed on the first base material: a first resin component as one of the two resin components having a diffraction grating shape, a refractive index nA, and a swelling rate $\alpha$, and a second resin component as the other of the two resin components having a diffraction grating shape, a refractive index nB, and a swelling rate $\beta$, in which nA, nB, $\alpha$, and $\beta$ satisfy relations nA > nB and $2 \leq \beta/\alpha \leq 16$.

# FIG.1

**Description**

BACKGROUND OF THE INVENTION

Field of the Invention

The present invention relates to a diffractive optical element used in still and video cameras, and to an optical device and an imaging apparatus using the diffractive optical element.

Description of the Related Art

A conventional diffractive optical element using two different types of resins having different optical characteristics to be used for lenses is known. Such a diffractive optical element utilizes opposite chromatic aberration characteristics between a diffractive optical system and a refractive optical system, remarkably reducing the size and weight of the entire lens system. With a recent increase in the image quality of optical devices, such as still and video cameras, optical performance levels demanded for lenses are also increasing.

For example, as discussed in Japanese Patent Application Laid-Open No. 2009-46658, nano-size inorganic particles, such as zirconium oxide and titanium oxide, are dispersed in two different types of resins that form a diffractive optical element. A purpose of the dispersion is to improve a degree of freedom in designing refractive indices and Abbe numbers of the resins. However, containing inorganic particles in the resins causes an increase in a viscosity of the resins, increase in complexity of the manufacturing process, and increase in a process cost.

To make the process cost relatively low, diffractive optical elements are manufactured without adding inorganic particles to the resins. WO2017/179476 discusses a diffractive optical element using cured resins containing thiol compounds providing a high refractive index and high dispersion.

However, to improve the diffraction efficiency of the diffractive optical element by using resins not containing inorganic particles, it is necessary to increase a grating height of a diffraction grating. Further, many of resins not containing inorganic particles provide a low glass transition temperature, and are likely to absorb water. When the diffractive optical element is exposed to a high-temperature and high-humidity environment for a prolonged period of time, a volume expansion due to the water absorption changes the refractive index and the grating height of the resins, and therefore resulting in a degraded diffraction efficiency of the diffractive optical element.

SUMMARY OF THE INVENTION

According to a first aspect of the present invention, there is provided a diffractive optical element as specified in claims 1 to 10. According to a second aspect of the present invention, there is provided an optical device as specified in claim 11. According to a third aspect of the present invention, there is provided an imaging apparatus as specified in claims 12 and 13.

Further features of the present invention will become apparent from the following description of exemplary embodiments with reference to the attached drawings.

BRIEF DESCRIPTION OF THE DRAWINGS

Fig. 1 is a schematic view illustrating an exemplary embodiment of the diffractive optical element according to the present invention.
Figs. 2A to 2D are schematic views illustrating an exemplary embodiment of a method for manufacturing the diffractive optical element according to the present invention.
Fig. 3 is a schematic view illustrating an exemplary embodiment of an imaging apparatus according to the present invention.
Figs. 4A to 4C are schematic views illustrating a method for manufacturing a sample for evaluating the optical characteristics of resins used in the diffractive optical element according to the present invention.
Fig. 5 illustrates a relation between a swelling rate ratio ($\beta/\alpha$) and a phase difference variation according to exemplary embodiments and comparative examples.
Fig. 6 is a schematic view illustrating the diffractive optical element according to a comparative example.

DESCRIPTION OF THE EMBODIMENTS

[Diffractive Optical Element]

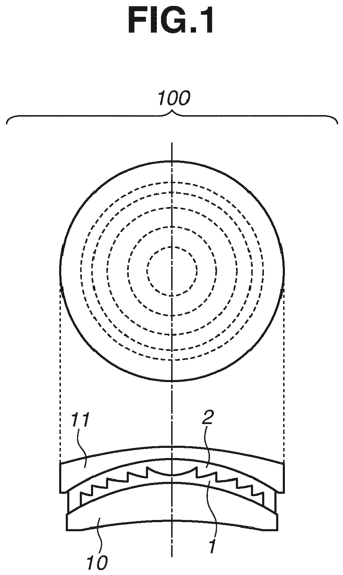

Fig. 1 is a plan view and a side view illustrating an exemplary embodiment of the diffractive optical element according to the present invention.

A diffractive optical element 100 includes a first base material 10, a first resin component 1 having a diffraction grating shape, a second resin component 2 having a diffraction grating shape, and a second base material 11. The first resin component 1, the second resin component 2, and the second base material 11 are laminated on the first base material 10 in this order. The first resin component 1 and the second resin component 2 are in close contact with each other. The first resin component 1 has a refractive index nA with respect to a d-line. The second resin component 2 has a refractive index nB with respect to a d-line. The present invention will be described below centering on an example where the refractive index nA of the first resin component 1 is higher than the refractive index nB of the second resin component 2 (i.e., nA > nB).

(Base Materials)

The first base material 10 is a transparent material made of glass or plastic. Examples of usable glass include S-LAH55 (from OHARA INC.), and S-FPL51 (from OHARA INC.). S-LAH55 is a lanthanum-based high refractive index low-dispersion glass, and S-FPL51 is a super low dispersion glass. In Fig. 1, the plane of the first base material 10 in contact with the first resin component 1 has a spherical shape. However, the plane may have a flat plate shape.

In Fig. 1, the second base material 11 is disposed on the second resin component 2. However, the second base material 11 may be omitted. Whether to use the second base material 11 can be determined according to the desired optical characteristics. The second base material 11 may be, for example, a transparent substrate made of glass or plastic in a same manner as the first base material 10.

(First Resin Component)

The first resin component 1 is made of a transparent colorless resin for optical applications. To acquire desired optical characteristics of the diffractive optical element 100, a refractive index and an Abbe number of the resin are designed together with a refractive index and an Abbe number of the resin forming the second resin component 2 (described below). An Abbe number, which is an index representing a gradient of a refractive index in a visible light region (with a wavelength from 468.1 to 656.3 nm), is calculated by the following Formula (1).

$$\text{Abbe number } \nu = (nd - 1)/(nf - nc), \quad (1)$$

where nd is a refractive index with respect to a d-line (587.6 nm), nf is a refractive index with respect to an f-line (486.1 nm), and nc is a refractive index with respect to a c-line (656.3 nm).

The resin forming the first resin component 1 has a refractive index nA with respect to a d-line. The refractive index nA of the first resin component 1 is higher than the refractive index nB of the second resin component 2, i.e., a relation nA > nB holds. The refractive index nA of the first resin component 1 is, for example, 1.55 or more and 1.65 or less.

An Abbe number $\nu$A of the first resin component 1 is larger than an Abbe number $\nu$B of the second resin component 2, i.e., a relation $\nu$A > $\nu$B holds. More specifically, the first resin component 1 provides a higher refractive index and lower dispersion than those provided by the second resin component 2. In other words, the second resin component 2 provides a lower refractive index and higher dispersion than those provided by the first resin component 1. The Abbe number of the first resin component 1 is, for example, 33 or more and 47 or less.

A swelling rate $\alpha$ of the first resin component 1 is smaller than a swelling rate $\beta$ of the second resin component 2, i.e., a relation $2 \leq \beta/\alpha \leq 16$ holds. The relation $2 \leq \beta/\alpha \leq 16$ holding between the swelling rate $\alpha$ of the first resin component 1 having a high refractive index and the swelling rate $\beta$ of the second resin component 2 having a low refractive index makes it possible to offer a diffractive optical element having a diffraction efficiency that hardly varies even if the diffractive optical element is exposed to a high-temperature and high-humidity environment (e.g., 60°C temperature and 70% humidity) for a prolonged period of time. A swelling rate is a volume change, which is expressed in percentage, occurring when the material absorbs water.

The resin forming the first resin component 1 contains thiol compounds and (meta)acrylate compounds to provide a high refractive index and low dispersion. The first resin component 1 is obtained by curing the uncured first resin composition 1a that contains monomers and/or oligomers of the thiol compounds and monomers and/or oligomers of the (meta)acrylate. The first resin composition 1a is an energy curable resin. An energy curable resin is a resin which is cured when applied with light energy and/or thermal energy in an uncured condition.

Examples of the thiol compounds contained in the first resin composition 1a used to form the first resin component 1 include 4-mercapto methyl-3,6-dithia-1,8-octane dithiol, 4-mercapto methyl-1,8-dimercapto-3,6-dithiaoctane (4-mercaptomethyl-3,6-dithia-1,8-octanedithiol), 4,8-bis(mercaptomethyl)-1,11-dimercapto-3,6,9-trithiaundecane (4,8-dimercapto methyl-1,11-dimercapto-3,6,9-trithiaundecane), and 5,7-bis(mercaptomethyl)-1,11-dimercapto-3,6,9-trithiaundecane (5,7-dimercapto methyl-1,11-dimercapto-3,6,9-trithiaundecane).

Examples of (meta)acrylate compounds contained in the first resin composition 1a used to form the first resin component 1 include tris(2-acryloxy ethyl) isocyanurate, oligoethylene glycol di(meta)acrylate, dimethylol tricyclo decane di(meta)acrylate, trimethylol propane tri(meta)acrylate, pentaerythritol tetra(meta)acrylate, and dipentaerythritol hexa(meta)acrylate.

From a viewpoint of reducing the swelling rate of the first resin component 1, it is desirable that the first resin composition 1a has a small number of hydrophilic groups including a hydroxyl group, a carboxylic acid group, and an amino group. Thus, tris(2-acryloxy ethyl) isocyanurate, dimethylol tricyclodecane di(meta)acrylate, and trimethylol propane tri(meta)acrylate are desirable as the above-described (meta)acrylate-based compounds.

It is also desirable that the ratio of thiol compounds in the resin composition 1a is within a range of 30 mass% or more and 80 mass% or less. The content ratio of thiol compounds within this range provides favorable optical characteristics and moldability. The content ratio of thiol compounds of less than 30 mass% may make it impossible to increase the refractive index. On the other hand, the content ratio of thiol compounds exceeding 80 mass% may make the moldability insufficient when forming the first resin component 1.

The first resin composition 1a used to form the first resin component 1 contains a polymerization initiator. The polymerization initiator may also be a photopolymerization initiator or thermopolymerization initiator, which can be determined by the selected manufacturing process. However, in replica molding with which the diffraction grating shape can be easily manufactured, it is desirable that the first resin composition 1a contains a photopolymerization initiator. Examples of photopolymerization initiators include 2-benzyl-2-dimethylamino-1-(4-morpholino phenyl)-1-butanone, 1-hydroxy-cyclohexyl-phenyl-ketone, bis(2,46-trimethyl benzoyl)-phenyl phosphine oxide, 4-phenyl benzophenone, 4-phenoxy benzophenone, 4,4'-diphenyl benzophenone, and 4,4'-diphenoxy benzophenone. From a viewpoint of favorable transparency of the first resin component 1, 1-hydroxy-cyclohexyl-phenyl-ketone is desirable.

It is desirable that the content ratio of the photopolymerization initiator is 0.01 mass% or more and 10 mass% or less to the entire first resin composition 1a. Only one type of photopolymerization initiator can be used depending on the reactivity with oligomers and the wavelength to be radiated in photo-curing. Two or more types of photopolymerization initiators can also be used together.

It is desirable that the glass transition temperature (Tg) of the first resin component 1 is equal to or higher than the glass transition temperature of the second resin component 2. This aims for making the volume expansion by the water absorption of the first resin component 1 smaller than that of the second resin component 2 based on the correlation between the glass transition temperature and the water absorption property.

The first resin component 1 has a diffraction grating shape. This diffraction grating shape is formed of a concentric relief pattern including a plurality of circles around the optical axis O when planarly viewed from the lamination direction. The grating pitch in the relief pattern is wide around the center of the diffractive optical element, and decreases with decreasing distance to the peripheral edge portion. This configuration aims for producing the convergence and divergence actions of light. The height of the diffraction grating is, for example, 10 $\mu$m or more and 30 $\mu$m or less. The height within this range makes it easier to obtain sufficient optical performance, and makes it hard to produce the deformation of the grating at the time of mold release. A thickness of the base as the reference for the grating height of the first resin component 1 is, for example, 10 $\mu$m or more and 250 $\mu$m or less. A diffraction grating pitch is, for example, 100 $\mu$m or more and 5 mm or less. A number of pitches is 50 or more and 100 or less.

It is desirable that the first resin component 1 and the first resin composition 1a do not contain inorganic particles. If the first resin composition 1a contains inorganic particles, the viscosity of the first resin composition 1a increases, possibly increasing the process cost.

(Second Resin Component)

Like the resin forming the first resin component 1, the resin forming the second resin component 2 is a transparent colorless resin for optics. To acquire desired optical characteristics of the diffractive optical element 100, the refractive index and the Abbe number of the resin are designed together with the refractive index and the Abbe number of the resin forming the first resin component 1.

The resin forming the second resin component 2 has a refractive index nB with respect to a d-line. The refractive index nB of the second resin component 2 is lower than a refractive index nA of the first resin component 1, and is, for example, 1.50 or more and 1.60 or less.

The Abbe number $\nu B$ of the second resin component 2 is larger than the Abbe number $\nu A$ of the first resin component 1, and is, for example, 19 or more and 35 or less.

The resin forming the second resin component 2 contains aromatic diol compounds having fluorene as a functional group, (meta)acrylate compounds, and/or fluorine (meta)acrylate compounds to provide a low refractive index and high dispersion. The second resin component 2 is obtained by curing the uncured second resin composition 2a containing monomers and/or oligomers of aromatic diol compounds having fluorene as the functional group. The second resin composition 2a contains monomers and/or oligomers of (meta)acrylate compounds, and/or monomers and/or oligomers of fluorine (meta)acrylate compounds. The second resin composition 2a is an energy curable resin in a same manner as the first resin composition 1a.

Examples of aromatic diol compounds having fluorene as the functional group contained in the second resin composition 2a used to form the second resin component 2 include 9,9-bis[4-(2-acryloyloxyethoxy) phenyl] fluorene.

Examples of (meta)acrylate compounds contained in the second resin composition 2a used to form the second resin component 2 include tris(2-acryloxy ethyl) isocyanurate, oligoethylene glycol di(meta)acrylate, dimethylol tricyclo decane di(meta)acrylate, trimethylol propane tri(meta)acrylate, pentaerythritol tetra(meta)acrylate, and dipentaerythritol hexa(meta)acrylate.

Not only the above-described compounds but also oligomers may be contained in the second resin composition 2a used to form the second resin component 2. Types of oligomers are not limited to particular types. Examples of oligomers include urethane-modified polyester acrylate.

A swelling rate of the second resin component 2 can be adjusted by selecting the above-described aromatic diol compounds, (meta)acrylate compounds, and oligomer types. For example, in urethane-modified polyester acrylate, a water absorption coefficient increases with increasing number of ester bonds having a hydrophilic property. Thus, the swelling rate of the second resin component 2 can be made larger than the swelling rate of the first resin component 1 by suitably selecting the types and amounts of polyesters having different ratios between the ester bond and an alkyl group. Aromatic diol compounds, (meta)acrylate compounds, and oligomers having a number of hydrophilic groups, such as a hydroxyl group, carboxylic acid group, and amino group may be selected.

It is desirable that the content ratio of aromatic diol compounds in the resin composition 2a is 30 mass% or more. This makes it easier to increase the Abbe number of the second resin component 2 and makes it possible to increase the diffraction efficiency of the diffractive optical element 100.

The second resin composition 2a used to form the second resin component 2 contains a polymerization initiator. Like the case of the first resin composition 1a, the polymerization initiator may also be a photopolymerization initiator or a thermopolymerization initiator, which can be determined according to the selected manufacturing process. However, in replica molding with which the diffraction grating shape can be easily manufactured, it is desirable that the second resin composition 2a contains a photopolymerization initiator. Examples of photopolymerization initiators include 2-benzyl-2-dimethylamino-1-(4-morpholino phenyl)-1-butanone, 1-hydroxy-cyclohexyl-phenyl-ketone, bis(2,46-trimethyl benzoyl)-phenyl phosphine oxide, 4-phenyl benzophenone, 4-phenoxy benzophenone, 4,4'-diphenyl benzophenone, and 4,4'-diphenoxy benzophenone. From a viewpoint of the favorable transparency of the second resin component 2, 1-hydroxy-cyclohexyl-phenyl-ketone is desirable.

Like the case of the first resin composition 1a, it is desirable that the content ratio of the photopolymerization initiator is 0.01 mass% or more and 10 mass% or less to the entire second resin composition 2a. Only one type of photopolymerization initiator can be used depending on the reactivity with oligomers and the wavelength to be radiated in photo-curing. Two or more types of photopolymerization initiators can also be used together.

It is desirable that the glass transition temperature (Tg) of the second resin component 2 is lower than the glass transition temperature of the first resin component 1. This aims for making the volume expansion by the water absorption of the second resin component 2 larger than that of the first resin component 1. The glass transition temperature of the second resin component 2 is preferably 70°C or lower, and is more preferably 60°C or lower.

A base thickness of the second resin component 2 is, for example, 10 $\mu$m or more and 250 $\mu$m or less. The base thickness of the second resin component 2 is suitably set together with the base thickness and the grating height of the first resin component 1 according to the desired optical characteristics.

It is desirable that the second resin component 2 and the second resin composition 2a do not contain inorganic particles. If the second resin composition 2a contains inorganic particles, the viscosity of the second resin composition 2a increases, possibly increasing in the process cost.

(Mechanism of Diffractive Efficiency Variation by Water Absorption)

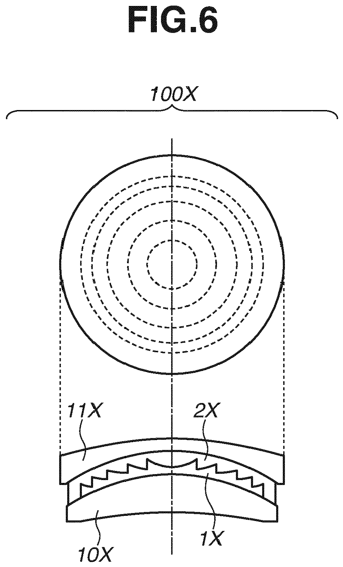

Fig. 6 is a schematic view illustrating the diffractive optical element according to a comparative example.

A diffractive optical element 100X according to the comparative example includes a first base material 10X, a first resin component 1X having a diffraction grating shape, a second resin component 2X having a diffraction grating shape, and a second base material 11X. The first resin component 1X, the second resin component 2X, and the second base material 11X are laminated on the first base material 10X in this order.

The first resin forming the first resin component 1X has a refractive index nAX with respect to a d-line, and the second resin forming the second resin component 2X has a refractive index nBX with respect to a d-line. The refractive index nAX is higher than the refractive index nBX. The diffractive optical element 100X according to the comparative example differs from the diffractive optical element 100 according to the present exemplary embodiment in that the relation $\beta X/\alpha X < 2$ holds between a swelling rate $\alpha X$ of the first resin component 1X and a swelling rate $\beta X$ of the second resin component 2X.

In general, a diffraction efficiency for light having a wavelength $\lambda$ in the diffractive optical element 100X having two layers laminated in close contact with each other is determined by the product of the refractive index difference (i.e., nAX - nBX) between the two layers and the grating height d of the grating portion of the diffraction grating.

When the diffractive optical element 100X is left for a prolonged period of time in a high-temperature and high-humidity environment, both the first resin component 1X and the second resin component 2X absorb water and then expand in volume. Since both the first resin component 1X and the second resin component 2X expand in volume to approximately the same extent, the refractive indices of both components decrease. However, the refractive index difference between the two components remain almost unchanged. However, since the grating height d increases by the volume expansion, the product of the refractive index difference between the two resin components and the grating height changes before and after the water absorption. Thus, the diffraction efficiency decreases after water absorption even if the diffractive optical element 100X is designed to obtain a high diffraction efficiency before water absorption.

On the other hand, in the diffractive optical element 100 according to the present invention, a relation $2 \leq \beta/\alpha \leq 16$ holds between the swelling rate $\alpha$ of the first resin component 1 having a small refractive index and the swelling rate $\beta$ of the second resin component 2 having a large refractive index.

When the diffractive optical element 100 is left for a prolonged period of time in a high-temperature and high-humidity environment, both the first resin component 1 and the second resin component 2 absorb water and then expand in volume. Since the swelling rate $\beta$ of the second resin component 2 is larger than the swelling rate $\alpha$ of the first resin component 1, the second resin component 2 expands more largely than the first resin component 1. Since the first resin component 1 and the second resin component 2 are laminated in close contact with each other, the expansion of the second resin component 2 accompanies the expansion of the first resin component 1. In this case, since the second resin component 2 is likely to absorb water, the volume after the expansion contains a large amount ratio of water. On the other hand, since the first resin component 1 is less likely to absorb water than the second resin component 2, the volume after the expansion contains a small amount ratio of water, resulting in a reduced density. The reduced density causes the first resin component 1 to provide a larger refractive index reduction than that of the second resin component 2. Thus, the refractive index difference between the two resin components after the water absorption is smaller than that before the water absorption. The diffraction efficiency is determined by the product of the refractive index difference (i.e., nA - nB) between the two resin components and the grating height d of the grating portion of the diffraction grating. Thus, even if the grating height d increases by the water absorption, the diffractive optical element 100 enables reducing the diffraction efficiency variation to a further extent than the diffractive optical element 100X according to the comparative example. More specifically, if the relation $2 \leq \beta/\alpha \leq 16$ holds, the diffraction efficiency variation before and after leaving the diffractive optical element 100 at a 60°C temperature and 70% humidity for 2,000 hours can be less than 5%.

In a case where $\beta/\alpha$ exceeds 16, when the diffractive optical element 100 is exposed to a high-temperature and high-humidity environment for a prolonged period of time, the refractive index difference between the two resin components increases too much, resulting in a reduced diffraction efficiency.

(Modifications)

Although the present invention has been described above centering on an example where the refractive index nA of the first resin component 1 is higher than the refractive index nB of the second resin component 2 (nA > nB), the present invention is also applicable to a case where the refractive index nA of the first resin component 1 is lower than the refractive index nB of the second resin component 2 (nA < nB). In this case, a relation $2 \leq \alpha/\beta \leq 16$ holds between the swelling rate $\alpha$ of the first resin component 1 having a small refractive index and the swelling rate $\beta$ of the second resin component 2 having a large refractive index. The Abbe number of the first resin component 1 is smaller than the Abbe number of the second resin component 2.

[Manufacturing Method of Diffractive Optical Element]

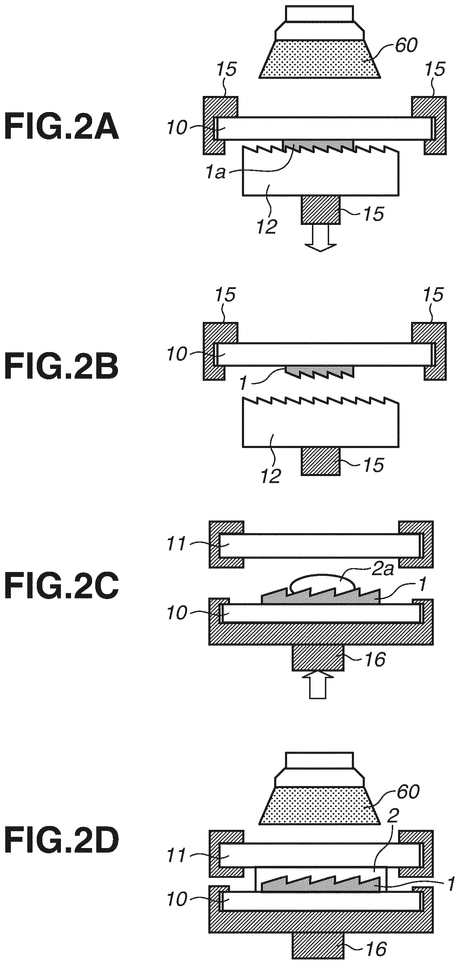

Figs. 2A to 2D schematically illustrate an exemplary embodiment of a manufacturing method of the diffractive optical element according to the present invention. A manufacturing process of the diffractive optical element 100 will be described with reference to Figs. 2A to 2D.

An appropriate amount of the uncured first resin composition 1a is filled between a mold 12 having an inverted shape of the desired diffraction grating shape and a first base material 10. The first resin composition 1a is designed to provide a higher refractive index and lower dispersion than that of the second resin component 2 after curing. The first base material 10 and the mold 12 are held by a mold release fixture 15.

The mold 12 and the first base material 10 are then moved to expand the uncured first resin composition 1a until the resin provides a desired thickness and covers the outside of the optically effective portion. When filling the resin, the mold 12 and/or the first base material 10 may be pressurized or heated as required.

Light or heat energy is subsequently applied to the filled uncured first resin composition 1a for curing. Referring to Fig. 2A, light energy is applied by using an ultraviolet light source 60. In this case, not only light but also heat may be applied to promote the curing reaction of the uncured first resin composition 1a.

The mold release fixture 15 is subsequently moved to release the mold 12 to form the first resin component 1. The first resin component 1 is made of the cured first resin composition 1a, and has a diffraction grating shape.

Further, the first base material 10 attached with the first resin component 1 formed thereon is supported by a molding fixture 16. An appropriate amount of the uncured second resin composition 2a is then filled between the diffraction grating shape of the first resin component 1 and the second base material 11. Since the manufacturing process of the diffractive optical element 100 aims for forming the second resin component 2, a mold different from the mold 12 may be used instead of the second base material 11.

As illustrated in Fig. 2D, the uncured second resin composition 2a is then expanded until the resin provides a desired thickness and covers the outside of the optically effective portion. Further, light and heat energy are applied to the filled uncured second resin composition 2a by using a light source 60 to form the second resin component 2. The second resin component 2 is made of the cured second resin composition 2a and has a diffraction grating shape.

The diffractive optical element 100 can be manufactured by the above-described process.

The second base material 11 may be separated after forming the second resin component 2.

[Imaging Apparatus]

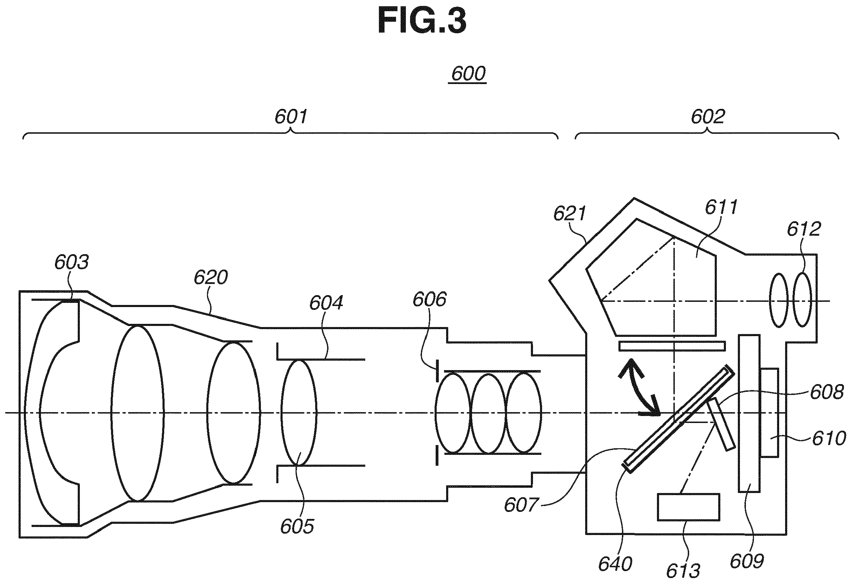

Fig. 3 illustrates a configuration of a single-lens reflex digital camera according to a preferred exemplary embodiment of the imaging apparatus according to the present invention. As illustrated in Fig. 3, a camera body 602 and a barrel 601 as an optical device are combined. The barrel 601 is a what is called an interchangeable lens, which is attachable to and detachably from the camera body 602.

Light from a subject passes through an optical system including a plurality of lenses 603 and 605 disposed on the optical axis of the imaging optical system in a housing 620 of the barrel 601. The light is then received by an image sensor 610. The diffractive optical element according to the present invention can be used in, for example, the lens 605.

The lens 605 is supported by an inner cylinder 604 and movably supported with respect to an outer cylinder of the barrel 601 for focusing or zooming.

In the observation period before image capturing, light from the subject is reflected by a main mirror 607 disposed in a housing 621 of the camera body 602. The light then penetrates a prism 611 and reaches a finder lens 612, allowing a photographer to view the captured image through the finder lens 612. The main mirror 607 is, for example, a semitransparent mirror. The light that penetrated the main mirror 607 is reflected in the direction of an automatic focus (AF) unit 613 by a sub mirror 608. This reflected light is used for, for example, distance measurement. The main mirror 607 is attached to a main mirror holder 640 through adhesion and supported thereby. At the time of image capturing, the main mirror 607 and the sub mirror 608 are moved out of the optical path by a drive mechanism (not illustrated). A shutter 609 is then opened to form a captured image of light entering from the barrel 601, on the image sensor 610. A diaphragm 606 is configured to change a brightness and focal depth at the time of image capturing by changing an opening area.

Exemplary Embodiments:

Firstly, a method for evaluating the diffractive optical element of the present invention will be described.

<d-Line Refractive Index/Abbe Number>

We prepared an optical characteristic evaluation sample, and evaluated the refractive indices and the Abbe numbers of the first resin component 1 and the second resin component 2 of the diffractive optical elements according to the exemplary embodiment and the comparative example. The refractive indices and the Abbe numbers can also be evaluated even without using the optical characteristic evaluation sample. In this case, the base materials are removed from the diffractive optical element and then the resin materials are taken out. Firstly, a process for preparing a sample for optical characteristic evaluation will be described.

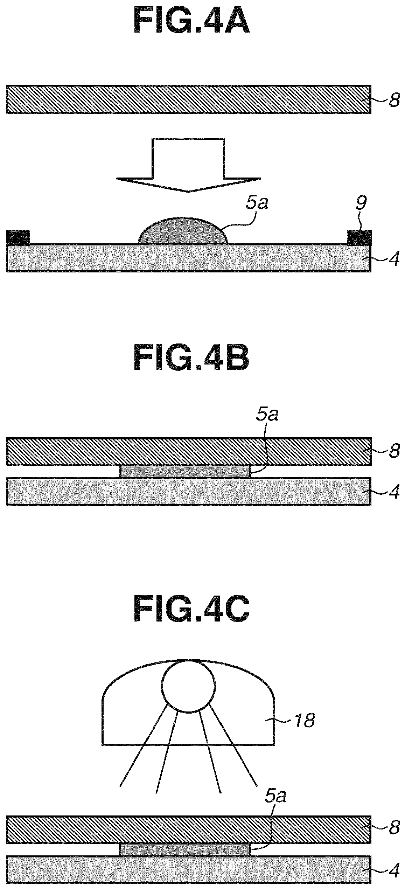

As illustrated in Fig. 4A, spacers 9 having a 500 $\mu$m thickness and an uncured resin composition 5a (raw material of resin) as a measurement target were disposed on a glass 4 (BK7) with a 1 mm thickness. With a quartz glass 8 with a 1 mm thickness placed on the above-described configuration via the spacers 9, the uncured resin composition 5a was expanded.

Next, the spacers 9 were removed, as illustrated in Fig. 4B. Subsequently, as illustrated in Fig. 4C, the resin composition 5a was irradiated through the quartz glass 8 with an illuminance of 20 mW/cm2 (condition 50J) for 2,500 seconds using a high pressure mercury lamp (UL750 from HOYA CANDEO OPTRONICS) as a light source 18. After curing the resin composition 5a, the quartz glass 8 was removed and then the resin composition 5a was annealed at 80°C for 16 hours to prepare a sample for optical characteristic evaluation. The shape of the cured resin was 500 μm thick and 5 mm by 20 mm in size within the glass plane.

For the sample obtained, the refractive index was measured for each wavelength with respect to an f-line (486.1 nm), d-line (587.6 nm), and c-line (656.3 nm) from the glass 4 side using a refractometer (KPR-30 from Shimazu Corporation).

The Abbe number v was calculated based on the refractive index for each of the measured wavelengths by using the following Formula (1):

$$\text{Abbe number } v = (nd - 1)/(nf - nc) \quad (1)$$

<Measuring Swelling Ratios>

We prepared a swelling rate evaluation sample, and evaluated the swelling rates of the first resin component 1 and the second resin component 2 of the diffractive optical elements according to the exemplary embodiment and the comparative example. These swelling rates can also be evaluated even without using the swelling rate evaluation sample. In this case, the base materials are removed from the diffractive optical element and then the resin materials are taken out. The sample for swelling rate evaluation was prepared with the same procedures as those for the sample for optical characteristic evaluation.

Firstly, the dimensions of the prepared sample were measured with an optical microscope to calculate the volume. Subsequently, this sample was put in a beaker filled with purified water and then immersed therein for 24 hours. Thereafter, the dimensions of the prepared sample were measured again with the optical microscope to calculate a volume. The volume after immersing the sample in purified water was divided by the volume before immersing the sample in purified water, and the quotient was expressed in percentage as a swelling rate.

The ratio of the swelling rate β of the second resin component 2 to the swelling rate α of the first resin component 1, i.e., β/α, was also calculated.

<Measuring Glass Transition Temperatures>

We prepared a sample for glass transition temperature evaluation and evaluated the glass transition temperatures of the first resin component 1 and the second resin component 2 of the diffractive optical elements according to the exemplary embodiment and the comparative example. The glass transition temperatures can also be evaluated even without using the sample for glass transition temperature evaluation. In this case, the base materials are removed from the diffractive optical element and then the resin materials are taken out. The sample for glass transition temperature evaluation was prepared with the same procedures as those used for the optical characteristic evaluation sample.

We evaluated the prepared sample with a differential scanning calorimeter (DSC) (Pyris1 from PerkinElmer Inc.), while being supported, at a temperature rising rate of 5°C/s and a measurement temperature from -20 to 150°C. We determined a peak of an endothermic reaction as the glass transition temperature.

<Evaluating Diffraction Efficiencies>

We measured the diffraction efficiencies of the diffractive optical elements according to the exemplary embodiment and the comparative example with an automatic optical element measuring apparatus (ASP-32 from Bunkoukeiki Co., Ltd.). The diffractive optical elements were irradiated with spot light, and the light quantity of the transmitted light was measured. Subsequently, the light quantity of diffracted light of the 1st-order as the design order was measured. The ratio of the light quantity of the design order to the total transmitted light quantity was expressed in percentage as a diffraction efficiency.

We put the diffractive optical elements according to the exemplary embodiment and the comparative example in a constant-temperature bath set to a 60°C temperature and 70% humidity. After the elapse of 2,000 hours, we took out the diffractive optical elements and evaluated the diffraction efficiency variation. We also evaluated the variation of the phase difference (e.g., a product of the refractive index difference between the two resin components and the grating height) before and after immersing the diffractive optical elements in the constant-temperature bath.

<Adjusting First Resin Composition 1a>

We prepared, for example, thiol compounds and (meta)acryl compounds to provide 100 parts by mass of the first resin composition 1a. We put the following compounds in a bottle and mixed these compounds: 52.5 parts by mass of 4-mercapto-3,6-dithia-1,8-octanedithiol as a thiol compound, 30 parts by mass of tris(2-acryloxy ethyl) isocyanurate as a (meta)acryl compound, and 0.1 parts by mass of triethylamine.

After the mixing, the mixture was stirred at 23°C for 72 hours to adjust the viscosity, and then the mixture was filtered through an adsorbent to eliminate triethylamine. We added 15.5 parts by mass of tris(2-acryloxy ethyl) isocyanurate and 2 parts by mass of 1-hydroxy cyclohexyl phenyl ketone. We then uniformly mixed these materials to obtain the first resin composition 1a.

<Adjusting Second Resin Composition 2a>

We prepared, for example, aromatic diol compounds and (meta)acryl compounds having fluorene as the functional group to provide 100 parts by mass of the second resin composition 2a. We put the following compounds in a bottle: 45 parts by mass of 9,9-bis[4-(2-acryloyl oxyethoxy) phenyl] fluorene as an aromatic diol compound, 38 parts by mass of pentaerythritol triacrylate as a (meta)acryl compound, and 15 parts by mass of urethane-modified polyester acrylate. We also put 2 parts by mass of 1-hydroxy cyclohexyl phenyl ketone in the bottle, and uniformly mixed these materials to obtain the second resin composition 2a.

<Manufacturing Diffractive Optical Elements>

Diffractive optical elements were manufactured by using the manufacturing method illustrated in Figs. 2A to 2D.

Firstly, as illustrated in Fig. 2A, the uncured first resin composition 1a was prepared on the mold 12 having a diffraction grating shape. The first base material 10 made of glass with a 2 mm thickness was disposed on the first resin composition 1a. Subsequently, the first resin composition 1a was irradiated with a light intensity of 14.2 to 20 mW/cm2 for 600 to 850 seconds by using a high pressure mercury lamp 60 (EXECURE250 from HOYA CANDEO OPTRONICS) as a light source.

Next, as illustrated in Fig. 2B, the mold 12 was released and then annealed at 80°C for 72 hours in the atmosphere to form the first resin component 1 having a diffraction grating shape. The grating height of the diffraction grating was 19.4 $\mu$m. The base thickness of the diffraction grating (distance from the glass to the grating valley) was 50 $\mu$m, and the grating pitch was 200 $\mu$m.

Subsequently, as illustrated in Fig. 2C, the first base material 10 with the first resin component 1 formed thereon was supported by a molding fixture 16. The uncured second resin composition 2a was dropped onto the diffraction grating shape of the first resin component 1. As illustrated in Fig. 2D, the second base material 11 of flat glass was placed on the second resin composition 2a. The second resin composition 2a was then extended such that the radial length of the second resin component 2 reached from a radial end of the first resin component 1 to the 300 $\mu$m position.

Lastly, this sample was irradiated with light with an illuminance of 20 mW/cm2 (condition 50J) through the quartz glass 8 for 2,500 seconds by using a high pressure mercury lamp (UL750 from HOYA CANDEO OPTRONICS) as a light source 60. After curing the second resin composition 2a, the second resin composition 2a was annealed at 80°C for 72 hours to obtain the second resin component 2. Thus, we obtained a diffractive optical element 1000. The second resin component 2 was 50 $\mu$m thick from the grating apexes of the first resin component 1.

<Evaluation Results>

In the diffractive optical element according to the first exemplary embodiment, the refractive index and the Abbe number of the first resin component 1 disposed on the first base material were 1.622 and 39, respectively. The refractive index and the Abbe number of the second resin component 2 disposed on the first resin component 1 were 1.588 and 30, respectively.

According to the first exemplary embodiment, the swelling rate of the first resin component 1 was 0.08%. The swelling rate of the second resin component 2 was 0.66%. Therefore, the ratio of the swelling rate of the first resin component 1 to the swelling rate of the second resin component 2 was 8.3.

According to the first exemplary embodiment, the glass transition temperature of the first resin component 1 was 52°C. The glass transition temperature of the second resin component 2 was 90°C.

The diffractive optical element according to the first exemplary embodiment provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency remained unchanged at 96%. The phase difference variation was -4 nm.

A second exemplary embodiment differs from the first exemplary embodiment in the composition of a second resin component 2. We prepared and evaluated a diffractive optical element according to the second exemplary embodiment based on a method similar to that according to the first exemplary embodiment except for adjustment procedures for a second resin composition 2a.

<Adjusting Second Resin Composition 2a>

We prepared, for example, aromatic diol compounds and (meta)acryl compounds having fluorene as a functional group to provide 100 parts by mass of the second resin composition 2a. We put the following compounds in a bottle: 45 parts by mass of 9,9-bis[4-(2-acryloyl oxyethoxy) phenyl] fluorene as an aromatic diol compound, 43 parts by mass of pentaerythritol triacrylate as a (meta)acryl compound, and 10 parts by mass of urethane-modified polyester acrylate. We also put 2 parts by mass of 1-hydroxy cyclohexyl phenyl ketone in the bottle, and then uniformly mixed these materials to obtain the second resin composition 2a.

<Evaluation Results>

In the diffractive optical element according to the second exemplary embodiment, the refractive index and the Abbe number of the second resin component 2 disposed on the first resin component 1 were 1.588 and 30, respectively.
According to the second exemplary embodiment, the swelling rate of the second resin component 2 was 0.40%. Therefore, the ratio of the swelling rate of the second resin component 2 to the swelling rate of the first resin component 1 was 5.0.
According to the second exemplary embodiment, the glass transition temperature of the second resin component 2 was 92°C.
The diffractive optical element according to the second exemplary embodiment provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency did not largely change at 95%. The phase difference variation was -6 nm.
A third exemplary embodiment differs from the first exemplary embodiment in the composition of a second resin component 2. We prepared and evaluated a diffractive optical element according to the third exemplary embodiment based on a method similar to that according to the first exemplary embodiment except for adjustment procedures for a second resin composition 2a.

<Adjusting Second Resin Composition 2a>

We prepared aromatic diol compounds and (meta)acryl compounds having fluorene as the functional group to provide 100 parts by mass of the second resin composition 2a. We put the following compounds in a bottle: 45 parts by mass of 9,9-bis[4-(2-acryloyl oxyethoxy) phenyl] fluorene as an aromatic diol compound, 46 parts by mass of pentaerythritol triacrylate as a (meta)acryl compound, and 7 parts by mass of urethane-modified polyester acrylate. We also put 2 parts by mass of 1-hydroxy cyclohexyl phenyl ketone in the bottle, and then uniformly mixed these materials to obtain the second resin composition 2a.

<Evaluation Results>

In the diffractive optical element according to the third exemplary embodiment, the refractive index and the Abbe number of the second resin component 2 disposed on the first resin component 1 were 1.588 and 30, respectively.
According to the third exemplary embodiment, the swelling rate of the second resin component 2 was 0.31%. Therefore, the ratio of the swelling rate of the second resin component 2 to the swelling rate of the first resin component 1 was 3.9.
According to the third exemplary embodiment, the glass transition temperature of the second resin component 2 was 93°C.
The diffractive optical element according to the third exemplary embodiment provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency did not largely change at 94%. The phase difference variation was -10 nm.
A fourth exemplary embodiment differs from the first exemplary embodiment in the composition of a second resin component 2. We prepared and evaluated a diffractive optical element according to the fourth exemplary embodiment based on a method similar to that according to the first exemplary embodiment except for adjustment procedures for a second resin composition 2a.

<Adjusting Second Resin Composition 2a>

We primarily prepared aromatic diol compounds and (meta)acryl compounds having fluorene as a functional group to provide 100 parts by mass of the second resin composition 2a. We put the following compounds in a bottle: 45 parts by mass of 9,9-bis[4-(2-acryloyl oxyethoxy) phenyl] fluorene as an aromatic diol compound, 33 parts by mass of pentaerythritol triacrylate as a (meta)acryl compound, and 20 parts by mass of urethane-modified polyester acrylate. We also put 2 parts by mass of 1-hydroxy cyclohexyl phenyl ketone in the bottle, and then uniformly mixed these materials to obtain the second resin composition 2a.

<Evaluation Results>

In the diffractive optical element according to the fourth exemplary embodiment, the refractive index and the Abbe number of the second resin component 2 disposed on the first resin component 1 were 1.588 and 30, respectively.
According to the fourth exemplary embodiment, the swelling rate of the second resin component 2 was 1.13%. Therefore, the ratio of the swelling rate of the second resin component 2 to the swelling rate of the first resin component 1 was 14.1.
According to the fourth exemplary embodiment, the glass transition temperature of the second resin component 2 was 89°C.
The diffractive optical element according to the fourth exemplary embodiment provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency did not largely change at 94%. The phase difference variation was +10 nm.
A fifth exemplary embodiment differs from the first exemplary embodiment in the compositions of a first resin component 1 and a second resin component 2. We prepared and evaluated a diffractive optical element according to the fifth exemplary embodiment based on a method similar to that according to the first exemplary embodiment except for adjustment procedures for a first resin composition 1a and a second resin composition 2a.

<Adjusting First Resin Composition 1a>

We prepared thiol compounds and (meta)acryl compounds to provide 100 parts by mass of the first resin composition 1a. We put the following compounds and mixed these compounds: 53.5 parts by mass of 4-mercapto-3,6-dithia-1,8-octanedithiol as a thiol compound, 30 parts by mass of tris(2-acryloxy ethyl) isocyanurate as a (meta)acryl compound, and 0.1 parts by mass of triethylamine.
After the mixing, the mixture was stirred at 23°C for 72 hours to adjust the viscosity, and then the mixture was filtered through an adsorbent to eliminate triethylamine. We then added 14.5 parts by mass of tris(2-acryloxy ethyl) isocyanurate and 2 parts by mass of 1-hydroxy cyclohexyl phenyl ketone, and then uniformly mixed these materials. We thus obtained the first resin composition 1a.

<Adjusting Second Resin Composition 2a>

We prepared aromatic diol compounds and (meta)acryl compounds having fluorene as a functional group to provide 100 parts by mass of the second resin composition 2a. We put the following compounds in a bottle: 48 parts by mass of 9,9-bis[4-(2-acryloyl oxyethoxy) phenyl] fluorene as an aromatic diol compound, 35 parts by mass of pentaerythritol triacrylate as a (meta)acryl compound, and 15 parts by mass of urethane-modified polyester acrylate. We also put 2 parts by mass of 1-hydroxy cyclohexyl phenyl ketone in the bottle, and then uniformly mixed these materials. We thus obtained the second resin composition 2a.

<Evaluation Results>

In the diffractive optical element according to the fifth exemplary embodiment, the refractive index and the Abbe number of the first resin component 1 disposed on the first base material were 1.632 and 39, respectively. The refractive index and the Abbe number of the second resin component 2 disposed on the first resin component 1 were 1.598 and 29, respectively.
According to the fifth exemplary embodiment, the swelling rate of the first resin component 1 was 0.06%, and the swelling rate of the second resin component 2 was 0.48%. Therefore, the ratio of the swelling rate of the second resin component 2 to the swelling rate of the first resin component 1 was 8.0.

According to the fifth exemplary embodiment, the glass transition temperature of the first resin component 1 was 44°C. The glass transition temperature of the second resin component 2 was 89°C.

The diffractive optical element according to the fifth exemplary embodiment provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency did not largely change at 96%. The phase difference variation was +3 nm.

The above-described evaluation results according to the first to the fifth exemplary embodiment will be summarized in Table 1.

[Table 1]

| 1st: First exemplary embodiment 2nd: Second exemplary embodiment | | | | | | |
|---|---|---|---|---|---|---|
| 3rd: Third exemplary embodiment 4th: Fourth exemplary embodiment | | | | | | |
| | | | 1st | 2nd | 3rd | 4th |
| First resin component | Refractive index nA | | 1.622 | 1.622 | 1.622 | 1.622 |
| | Abbe number vA | | 39 | 39 | 39 | 39 |
| | Swelling rate $\alpha$(%) | | 0.08 | 0.08 | 0.08 | 0.08 |
| | Glass transfer temperature (°C) | | 52 | 52 | 52 | 52 |
| Second resin component | Refractive index nB | | 1.588 | 1.588 | 1.588 | 1.588 |
| | Abbe number vB | | 30 | 30 | 30 | 30 |
| | Swelling rate $\beta$(%) | | 0.66 | 0.40 | 0.31 | 1.13 |
| | Glass transfer temperature (°C) | | 90 | 92 | 93 | 89 |
| Swelling rate ratio ($\beta/\alpha$) | | | 8.3 | 5.0 | 3.9 | 14.1 |
| Phase difference variation after high-temperature high-humidity test | | | -4 | -6 | -10 | 10 |
| Diffraction efficiency after high-temperature high-humidity test | | | 96% | 95% | 94% | 94% |
| 5th: Fifth exemplary embodiment 1st*: First comparative example | | | | | | |
| 2nd*: Second comparative example 6th: Sixth exemplary embodiment | | | | | | |
| | | | 5th | 1st* | 2nd* | 6th |
| First resin component | Refractive index nA | | 1.632 | 1.622 | 1.622 | 1.62 |
| | Abbe number vA | | 39 | 39 | 39 | 39 |
| | Swelling rate $\alpha$(%) | | 0.06 | 0.08 | 0.08 | 0.10 |
| | Glass transfer temperature (°C) | | 44 | 52 | 52 | 80 |
| Second resin component | Refractive index nB | | 1.598 | 1.588 | 1.588 | 1.586 |
| | Abbe number vB | | 29 | 30 | 30 | 30 |
| | Swelling rate $\beta$(%) | | 0.48 | 1.31 | 0.01 | 1.00 |
| | Glass transfer temperature (°C) | | 89 | 87 | 94 | 90 |
| Swelling rate ratio ($\beta/\alpha$) | | | 8.0 | 16.4 | 0.1 | 10.0 |
| Phase difference variation after high-temperature high-humidity test | | | 3 | 16 | -16 | 13 |
| Diffraction efficiency after high-temperature high-humidity test | | | 96% | 90% | 90% | 92% |

(First Comparative Example)

A first comparative example differs from the first exemplary embodiment in the composition of a second resin component 2. We prepared and evaluated a diffractive optical element according to the first comparative example based on a method similar to that according to the first exemplary embodiment except for adjustment procedures for a second resin composition 2a.

<Adjusting Second Resin Composition>

We primarily prepared aromatic diol compounds and (meta)acryl compounds having fluorene as a functional group to provide 100 parts by mass of the second resin composition 2a. We put the following compounds in a bottle: 45 parts by mass of 9,9-bis[4-(2-acryloyl oxyethoxy) phenyl] fluorene as an aromatic diol compound, 28 parts by mass of pentaerythritol triacrylate as a (meta)acryl compound, and 25 parts by mass of urethane-modified polyester acrylate. We also put 2 parts by mass of 1-hydroxy cyclohexyl phenyl ketone in the bottle, and then uniformly mixed these materials. We thus obtained the second resin composition 2a.

<Evaluation Results>

In the diffractive optical element according to the first comparative example, the refractive index and the Abbe number of the second resin component 2 disposed on the first resin component 1 were 1.588 and 30, respectively.
According to the first comparative example, the swelling rate of the second resin component 2 was 1.31%. Therefore, the ratio of the swelling rate of the second resin component 2 to the swelling rate of the first resin component 1 was 16.4.
According to the first comparative example, the glass transition temperature of the second resin component 2 was 87°C.
The diffractive optical element according to the first comparative example provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency degraded by as large as 5% or more, i.e., the diffraction efficiency was 90%. The phase difference variation was +16 nm.

(Second Comparative Example)

A second comparative example differs from the first exemplary embodiment in the composition of a second resin component 2. We prepared and evaluated the diffractive optical element according to the second comparative example based on a method similar to that according to the first exemplary embodiment except for adjustment procedures for a second resin composition 2a.

<Adjusting Second Resin Composition>

We primarily prepared aromatic diol compounds and (meta)acryl compounds having fluorene as a functional group to provide 100 parts by mass of the second resin composition 2a. We put the following compounds in the bottle and then uniformly mixed these materials: 45 parts by mass of 9,9-bis[4-(2-acryloyl oxyethoxy) phenyl] fluorene as an aromatic diol compound and 53 parts by mass of pentaerythritol triacrylate as a (meta)acryl compound in a bottle. We also put 2 parts by mass of 1-hydroxy cyclohexyl phenyl ketone. We thus obtained the second resin composition 2a.

<Evaluation Results>

In the diffractive optical element according to the second comparative example, the refractive index and the Abbe number of the second resin component 2 disposed on the first resin component 1 were 1.588 and 30, respectively.
According to the second comparative example, the swelling rate of the second resin component 2 was 0.01%. Therefore, the ratio of the swelling rate of the second resin component 2 to the swelling rate of the first resin component 1 was 0.1.
According to the second comparative example, the glass transition temperature of the second resin component 2 was 94°C.
The diffractive optical element according to the second comparative example provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency degraded by as large as 5% or more, i.e., the diffraction efficiency was 90%. The phase difference variation was -16 nm.
A sixth exemplary embodiment differs from the first exemplary embodiment in the compositions of a first resin component 1 and a second resin component 2. We prepared and evaluated a diffractive optical element according to the sixth exemplary embodiment based on a method similar to that according to the first exemplary embodiment except for adjustment procedures for a second resin composition 2a.

<Adjusting First Resin Composition 1a>

We prepared thiol compounds and (meta)acryl compounds to provide 100 parts by mass of the first resin composition 1a. We put the following compounds in a bottle and then mixed these compounds: 52.5 parts by mass of 4-mercapto-3,6-dithia-1,8-octanedithiol as a thiol compound, 30 parts by mass of tris(2-acryloxy ethyl) isocyanurate as a (meta)acryl compound, and 0.1 parts by mass of triethylamine.

After the mixing, the mixture was stirred at 23°C for 72 hours to adjust the viscosity, the mixture was filtered through an adsorbent to eliminate triethylamine. We then added 15.5 parts by mass of tris(2-acryloxy ethyl) isocyanurate and 2 parts by mass of 1-hydroxy cyclohexyl phenyl ketone, and then uniformly mixed these materials. We thus obtained the first resin composition 1a.

<Adjusting Second Resin Composition 2a>

We prepared aromatic diol compounds and (meta)acryl compounds having fluorene as a functional group to provide 100 parts by mass of the second resin composition 2a. We put the following compounds in a bottle: 42 parts by mass of 9,9-bis[4-(2-acryloyl oxyethoxy) phenyl] fluorene as an aromatic diol compound, 36 parts by mass of pentaerythritol triacrylate as a (meta)acryl compound, and 20 parts by mass of urethane-modified polyester acrylate. We also put 2 parts by mass of 1-hydroxy cyclohexyl phenyl ketone in the bottle, and then uniformly mixed these materials. We thus obtained the second resin composition 2a.

<Evaluation Results>

In the diffractive optical element according to the sixth exemplary embodiment, the refractive index and the Abbe number of the first resin component 1 disposed on the first base material were 1.620 and 39, respectively. The refractive index and the Abbe number of the second resin component 2 disposed on the first resin component 1 were 1.586 and 30, respectively.

According to the sixth exemplary embodiment, the swelling rate of the first resin component 1 was 0.10%, and the swelling rate of the second resin component 2 was 1.00%. Therefore, the ratio of the swelling rate of the second resin component 2 to the swelling rate of the first resin component 1 was 10.0.

According to the sixth exemplary embodiment, the glass transition temperature of the first resin component 1 was 80°C. The glass transition temperature of the second resin component 2 was 90°C.

The diffractive optical element according to the sixth exemplary embodiment provided a diffraction efficiency of 96% for the entire visible light region (e.g., a wavelength from 468.1 to 656.3 nm). After immersing the diffractive optical element in the constant-temperature bath at a 60°C temperature and 70% humidity for 2,000 hours, the diffraction efficiency changed by 4% or more, i.e., the diffraction efficiency was 92%. The phase difference variation was +13 nm.

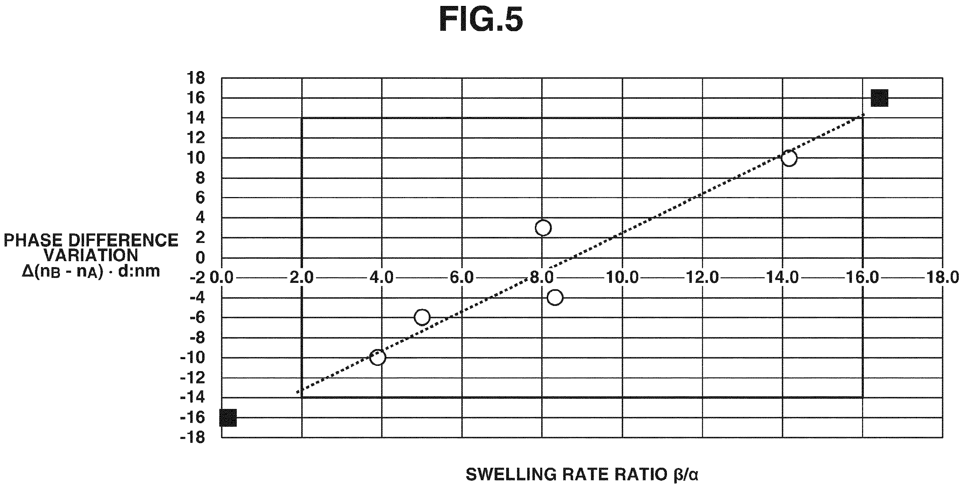

The above-described evaluation results according to the first and the second comparative examples and the sixth exemplary embodiment are summarized in Table 1. Fig. 5 summarizes the relation between the swelling rate ratio ($\beta/\alpha$) and the phase difference variation according to the first to the fifth exemplary embodiments and the first and the second comparative examples. Referring to Fig. 5, the white background circles denote the exemplary embodiments and the black squares denote the comparative examples. The dotted line linearly approximates the exemplary embodiments. The square frame illustrated in Fig. 5 denotes a range where the absolute value of the phase difference variation is 14 nm or less and the swelling rate ratio ($\beta/\alpha$) satisfies the relation $2 \leq \beta/\alpha \leq 16$.

Referring to the results of the first to the fifth exemplary embodiments and the first and the second comparative examples where the glass transition temperature of the first resin component 1 was 60°C or lower, it turned out that, when the ratio of the swelling rate of the second resin component 2 to the swelling rate of the first resin component 1, i.e., $\beta/\alpha$, satisfies the relation $2 \leq \beta/\alpha \leq 16$, the phase difference variation was as small as 14 nm. When the phase difference variation is 14 nm or less, the diffraction efficiency variation was as small as 2% or less. This may be because, even if the grating height of the diffraction grating varies by the water absorption, the refractive index difference between the first resin component 1 and the second resin component 2 decreases.

The sixth exemplary embodiment provides a smaller ratio of the swelling rate of the second resin component 2 to the swelling rate of the first resin component 1, i.e., $\beta/\alpha$, but provides a larger diffraction efficiency variation than that of the fourth exemplary embodiment. This may be because the sixth exemplary embodiment provides a high glass transition temperature of the first resin component 1 (80°C) and therefore provides a larger refractive index difference between the first resin component 1 and the second resin component 2 than that of the fourth exemplary embodiment. However, the sixth exemplary embodiment provides a smaller diffraction efficiency variation than those of the first and the second comparative examples, providing sufficient performance of the diffractive optical element.

As described above, the present invention makes it possible to offer a diffractive optical element having a diffraction efficiency that hardly changes even if it is exposed to a high-temperature and high-humidity environment (e.g., 60°C temperature and 70% humidity) for a prolonged period of time.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A diffractive optical element comprising:

   a first base material; and
   two resin components disposed on the first base material:

   a first resin component as one of the two resin components having a diffraction grating shape, a refractive index nA, and a swelling rate $\alpha$, and
   a second resin component as the other of the two resin components having a diffraction grating shape, a refractive index nB, and a swelling rate $\beta$,

   wherein nA, nB, $\alpha$, and $\beta$ satisfy relations nA > nB and $2 \leq \beta/\alpha \leq 16$.

2. The diffractive optical element according to claim 1, wherein a glass transition temperature of the second resin component is lower than a glass transition temperature of the first resin component.

3. The diffractive optical element according to claim 2, wherein the glass transition temperature of the second resin component is 60°C or lower.

4. The diffractive optical element according to any one of claims 1 to 3, wherein the first resin component has a cured material in which thiol compounds and (meta)acrylate compounds are polymerized.

5. The diffractive optical element according to any one of claims 1 to 4, wherein the second resin component has a cured material in which aromatic diol compounds and (meta)acrylate compounds are polymerized.

6. The diffractive optical element according to any one of claims 1 to 5, wherein an Abbe number of the first resin component is larger than an Abbe number of the second resin component.

7. The diffractive optical element according to any one of claims 1 to 6, wherein a grating height of a diffraction grating of the first resin component is 10 $\mu$m or more and 30 $\mu$m or less.

8. The diffractive optical element according to any one of claims 1 to 7, wherein the first and the second resin components do not substantially contain inorganic particles.

9. The diffractive optical element according to any one of claims 1 to 8, wherein a second base material is laminated on the first resin component and the second resin component.

10. A diffractive optical element according to any one of claims 1 to 9, wherein a diffraction efficiency variation before and after leaving the diffractive optical element at a 60°C temperature and 70% humidity for 2,000 hours is less than 5%.

11. An optical device comprising:

    a housing; and
    an optical system including a plurality of lenses within the housing,
    wherein at least one of the plurality of lenses is the diffractive optical element according to any one of claims 1 to 10.

12. An imaging apparatus comprising:

a housing;
an optical system including a plurality of lenses within the housing; and
an image sensor configured to receive light that passes through the optical system,
wherein at least one of the plurality of lenses is the diffractive optical element according to any one of claims 1 to 10.

13. The imaging apparatus according to claim 12, wherein the imaging apparatus is a camera.

# FIG.1

**FIG.2A**

**FIG.2B**

**FIG.2C**

**FIG.2D**

# FIG.3

EP 3 722 841 A1

# FIG.4A

8

5a

9

4

# FIG.4B

5a

8

4

# FIG.4C

18

5a

8

4

# FIG.5

PHASE DIFFERENCE
VARIATION
$\Delta(n_B - n_A) \cdot d$:nm

SWELLING RATE RATIO $\beta/\alpha$

EP 3 722 841 A1

# FIG.6

Europäisches
Patentamt

European
Patent Office

Office européen
des brevets

# EUROPEAN SEARCH REPORT

Application Number

EP 20 16 7262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2010 102000 A (PANASONIC CORP) 6 May 2010 (2010-05-06) * claims 1,4; examples 1,2 * | 1-13 | INV. G02B1/04 G02B5/18 |
| A | US 2006/176559 A1 (MINODA TAKATOSHI [JP] ET AL) 10 August 2006 (2006-08-10) * figures 8A-8D; example Embodiment 4 * * claim 1 * | 1-13 | |
| A | US 2018/074239 A1 (NIWA MAIKO [JP]) 15 March 2018 (2018-03-15) * paragraphs [0022], [0030]; figures 3A-3F * | 1-13 | |
| A | EP 1 635 197 A1 (NIKON CORP [JP]) 15 March 2006 (2006-03-15) * line 49, paragraph 48; figures 2a,b * | 1-13 | |

TECHNICAL FIELDS
SEARCHED    (IPC)

G02B

The present search report has been drawn up for all claims

| Place of search | Date of completion of the search | Examiner |
|---|---|---|
| The Hague | 25 June 2020 | Stabel, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 7262

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2020

| Patent document cited in search report | | Publication date | Patent family member(s) | | Publication date |
|---|---|---|---|---|---|
| JP 2010102000 | A | 06-05-2010 | NONE | | |
| US 2006176559 | A1 | 10-08-2006 | JP | 4258515 B2 | 30-04-2009 |
| | | | JP | 2006244685 A | 14-09-2006 |
| | | | US | 2006176559 A1 | 10-08-2006 |
| US 2018074239 | A1 | 15-03-2018 | JP | 6576405 B2 | 18-09-2019 |
| | | | JP | 2018045238 A | 22-03-2018 |
| | | | JP | 2019117421 A | 18-07-2019 |
| | | | US | 2018074239 A1 | 15-03-2018 |
| | | | US | 2020103566 A1 | 02-04-2020 |
| EP 1635197 | A1 | 15-03-2006 | CN | 1809769 A | 26-07-2006 |
| | | | CN | 101458350 A | 17-06-2009 |
| | | | EP | 1635197 A1 | 15-03-2006 |
| | | | JP | 5045739 B2 | 10-10-2012 |
| | | | JP | 2010102353 A | 06-05-2010 |
| | | | JP | WO2004113971 A1 | 03-08-2006 |
| | | | US | 2006093793 A1 | 04-05-2006 |
| | | | WO | 2004113971 A1 | 29-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009046658 A
- WO 2017179476 A